# FASCICULE DE BREVET EUROPEEN

(11) **EP 0 916 723 B1**
(45) Date de publication et mention de la délivrance du brevet: **17.10.2001**
(21) Numéro de dépôt: 97440108.5
(22) Date de dépôt: 17.11.1997
(51) Int. Cl.: C12G 1/02

(54) **Dispositif de pigeage pour cuves de vinification**
Tresteruntertaucheinrichtung zur Weinherstellung
Pomace-submerging apparatus for vinification

(43) Date de publication de la demande: 19.05.1999
(73) Titulaire: Tec Inox, 42120 Le Coteau (FR)
(72) Inventeur: Tollis, Silvio, F-42300 Roanne (FR)
(74) Mandataire: Arbousse-Bastide, Jean-Claude Philippe

(56) Documents cités:
- EP-A- 0 347 487
- DE-A- 3 629 575
- FR-A- 2 165 909

## Description

La présente invention a pour objet, dans le domaine vinicole, un dispositif de pigeage pour cuves de vinification.

On sait que le vin est obtenu par la fermentation du jus de raisin, ou moût, contenu dans des cuves en bois ou en acier. La pratique de la vinification est très ancienne et consiste à repousser dans le moût, tout en le parcellisant, le chapeau de marc qui se forme à la surface du liquide sous l'action du gaz carbonique se dégageant du moût en fermentation. Le dégagement de gaz carbonique entraîne en effet les parties solides formées par la peau et les pépins, qui se rassemblent à la surface du liquide pour former ledit chapeau de marc. Or, la peau du raisin joue un rôle important en vinification car elle renferme les essences odorantes des différents cépages qui constituent in fine le bouquet des vins.

C'est pourquoi il importe, au cours de la vinification, de mélanger le chapeau de marc avec le moût afin de récupérer les couleurs et les arômes contenus dans la peau des raisins. Cette opération de mélangeage, connue sous le nom de pigeage, est actuellement réalisée soit manuellement soit à l'aide d'un appareil non intégré à la cuve.

La méthode manuelle consiste à refouler le chapeau de marc dans le moût au moyen de perches dites "piges" munies en extrémité d'un disque ou d'une crosse que l'on enfonce dans le chapeau. Toutefois le manoeuvrement des perches est difficile et pénible et cette méthode est en outre peu efficace en termes de résultats.

Le document FR2614314 décrit un appareil de pigeage non intégré à la cuve comprenant un outil pigeur conique fixé à l'extrémité de la tige d'un vérin pigeur permettant son déplacement dans le sens axial pour faire pénétrer l'outil pigeur dans le chapeau de marc et l'en extraire, et des moyens commandés pour assurer le déplacement de ladite tige dans les deux autres dimensions, lesdits moyens étant portés par un support susceptible d'être immobilisé par rapport à une cuve, puis d'être libéré et déplacé de cette cuve à une autre.

Toutefois, les opérations de pigeage réalisées par cet appareil sont relativement longues du fait que l'outil de pigeage doit être déplacé sur toute la surface du chapeau de marc pour pouvoir repousser la totalité de ce dernier dans le moût. D'autre part, cet appareil est difficilement utilisable pour un fonctionnement automatique au moyen d'un automate programmable, en raison des différentes phases de déplacement à programmer pour amener l'outil de pigeage en divers lieux de la surface du chapeau de marc et notamment à proximité des bords internes de la cuve. En outre pour atteindre les bords de la surface du chapeau de marc, l'outil doit être incliné, ce qui diminue son efficacité.

La présente invention a pour but de remédier à ces inconvénients en proposant un dispositif qui permet de réaliser les opérations de pigeage dans des limites de temps bien inférieures à celles obtenues par les méthodes et les dispositifs existants, et ce avec une excellente efficacité.

Le dispositif de pigeage selon l'invention est du type comprenant un châssis en forme de portique supportant des moyens de pigeage et muni de moyens de roulement et de moyens moteurs commandés par une unité centrale de commande, permettant de déplacer ledit châssis au-dessus d'une rangée de cuves, d'une cuve à l'autre, l'axe central du châssis étant parallèle aux axes des cuves et sensiblement coaxial à l'axe de la cuve concernée lors d'une opération de pigeage, et il se caractérise en ce que les moyens de pigeage sont constitués d'au moins deux outils pigeurs situés dans un plan horizontal et reliés entre eux par une barre horizontale mobile d'une part en translation verticale et mobile d'autre part autour de l'axe central du châssis de manière que l'un au moins des outils pigeurs se trouve à proximité du bord de la cuve au cours de l'opération de pigeage.

Selon une caractéristique additionnelle du dispositif selon l'invention les outils pigeurs sont des plaques circulaires.

Conformément à l'invention la barre horizontale qui relie les outils pigeurs est solidarisée à l'extrémité de la tige d'un vérin excentré, parallèle à l'axe central du châssis et solidarisé par l'intermédiaire d'un bras radial à un arbre central mu en rotation par un moteur autour dudit axe central.

Le vérin, l'arbre central et les moyens moteurs du châssis sont commandés de manière à pouvoir déplacer la barre porteuse des outils de pigeage d'une position située hors de la cuve vers une position haute dans la cuve située sensiblement à la surface du moût. Le vérin et l'arbre central sont ensuite actionnés pour réaliser l'opération de pigeage.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.

Dans le dessin annexé:
- la figure 1 représente une vue de profil et en coupe partielle d'un dispositif de pigeage selon l'invention.
- la figure 2 représente une vue du même dispositif en cours fonctionnement.

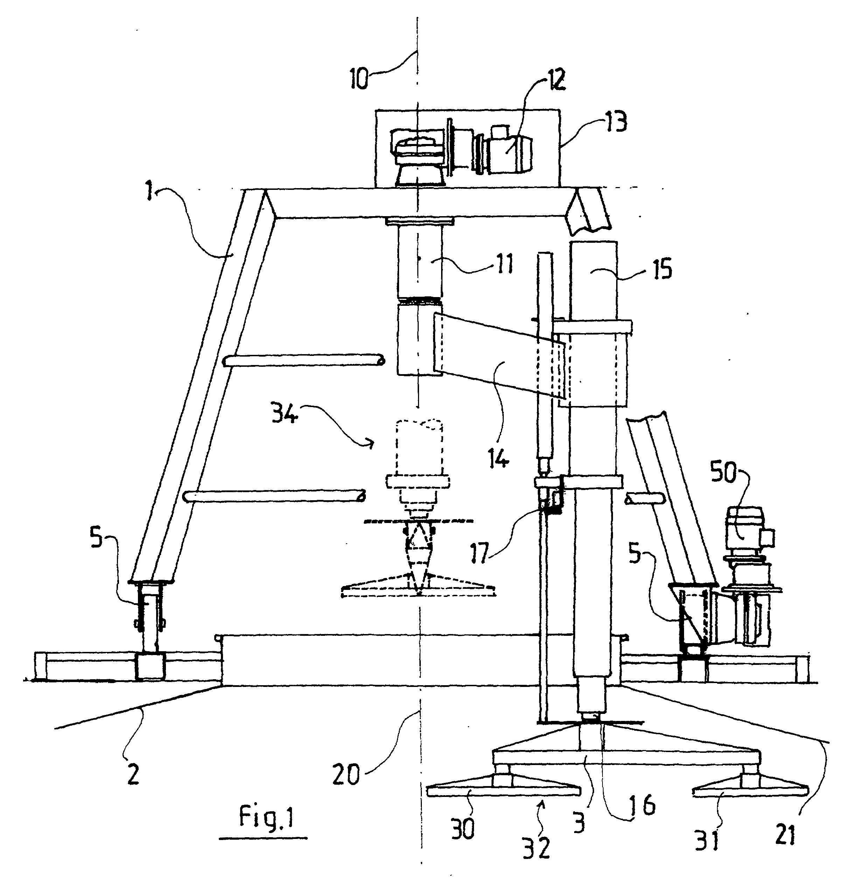

Si on se réfère à la figure 1 on peut voir que le dispositif de pigeage selon l'invention comprend un portique 1 qui est monté sur des roulettes 5 entraînées en rotation par un moteur 50 et, dont l'axe central vertical 10 est sensiblement confondu avec l'axe 20 de la cuve 2 sur laquelle le portique 1 est placé en position pour effectuer l'opération de pigeage; un arbre vertical 11 qui est mu en rotation autour de l'axe 10 par un moteur 12 placé dans un carter 13 fixé au sommet du portique 1 et qui entraîne en rotation autour de son axe 10, par l'intermédiaire d'un bras 14 solidarisé radialement à l'arbre 11, un vérin vertical 15 dont l'extrémité de la tige 16 est solidarisée à une barre 3 horizontale portant deux outils pigeurs 30,31 dont la face inférieure est plane et horizontale.

Un dispositif d'indexation 17 de la tige 16 du vérin 15 permet de positionner les outils pigeurs 30,31 dans une position haute 32 dans la cuve 2 en vue de l'opération de pigeage.

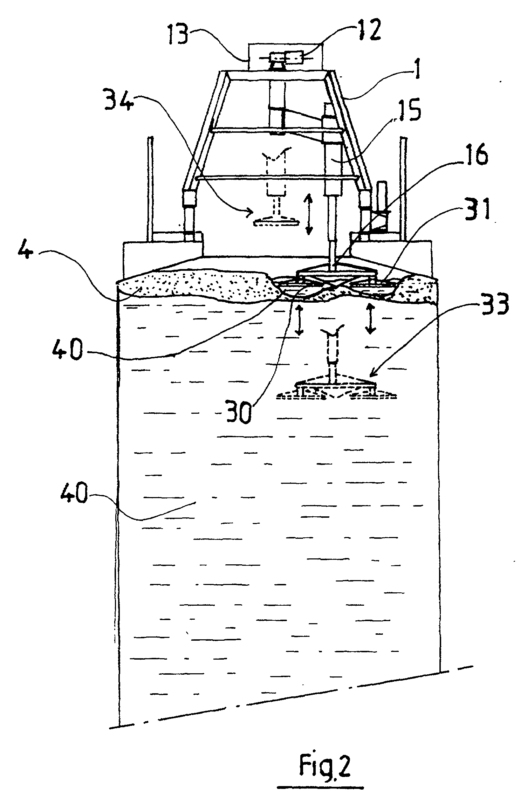

Les outils de pigeage 30,31 sont des plaques circulaires et sont disposés de manière que, dans la cuve 2, l'un 30 se trouve sensiblement au niveau de l'axe central 20 de la cuve 2, et l'autre 31 non loin du bord 21 de celle-ci., Cettes disposition, associée à la rotation du vérin 15 autour de l'axe central 10 et aux mouvements alternés en translation verticale de la tige 16 amenant les outils pigeurs 30,31 de la position haute 32 dans la cuve 2 vers une position basse 33 (représentée sur la figure 2), et inversement, permet de refouler le chapeau de marc 4 dans le moût 40 avec une grande efficacité.

Les outils de pigeage 30,31 sont introduits dans une cuve 2 en prépositionnant le portique 1 en retrait de l'axe central 20 de la cuve 2 et en positionnant les deux outils pigeurs 30,31, représentés en traits interrompus en 34, par l'intermédiaire de l'arbre 11, parallèlement au sens d'avancement du portique 1, ce qui permet de descendre les outils dans la cuve 2 en commandant la sortie de la tige 16 du vérin 15 jusqu'à ce que les deux outils pigeurs 30,31 se trouvent dans la cuve 2 en position haute 32 repérée par le système d'indexation 17. Puis on commande l'avancement du portique jusqu'à ce que son axe central 10 soit sensiblement confondu avec l'axe 20 de la cuve 2.

Toutes ces opérations sont réalisées automatiquement par l'intermédiaire d'une unité centrale de commande de type connu, non représentée sur les figures.

Le dispositif de pigeage selon l'invention est particulièrement adapté à être automatisé, de par la simplicité des mouvements effectués par les outils de pigeage. En outre ce dispositif est très efficace puisque les outils pigeurs restent constamment dans un plan parallèle à la surface du moût durant l'opération de pigeage, même lorsque l'un d'eux se trouve à proximitée du bord interne de la cuve,

## Revendications

1. Dispositif de pigeage pour cuves de vinification du type comprenant un châssis (1) en forme de portique supportant des moyens de pigeage (30,31) et muni de moyens de roulement (5) et de moyens moteurs (50), commandés par une unité centrale de commande, permettant de déplacer ledit châssis (1) au-dessus d'une rangée de cuves (2), d'une cuve à l'autre, l'axe central (10) du châssis (1) étant parallèle aux axes (20) des cuves (2) et sensiblement coaxial à l'axe (20) de la cuve (2) concernée lors d'une opération de pigeage; **caractérisé en ce que** les moyens de pigeage (30,31) sont constitués d'au moins deux outils pigeurs (30,31) situés dans un plan horizontal et reliés entre eux par une barre horizontale (3) mobile d'une part en translation verticale et mobile d'autre part autour de l'axe central (10) du châssis de manière qu'au moins l'un (31) des outils pigeurs (30,31) se trouve à proximité du bord de la cuve (2) au cours de l'opération de pigeage.

2. Dispositif de pigeage selon la revendication 1 **caractérisé en ce que** les outils pigeurs (30,31) sont des plaques circulaires.

3. Dispositif de pigeage selon l'une quelconque des revendications précédentes **caractérisé en ce que** la barre horizontale (3) qui relie les outils pigeurs (30,31) entre eux est solidarisée à l'extrémité de la tige (16) d'un vérin (15) excentré, parallèle à l'axe central (10) du châssis et solidarisé par l'intermédiaire d'un bras radial (14) à un arbre central (11) mu en rotation par un moteur (12) autour dudit axe central (10).

4. Dispositif de pigeage selon ll'une des revendications précédentes **caractérisé en ce qu'**il comprend en outre un dispositif d'indexation (17) de la tige (16) du vérin (15) permettant de positionner les outils pigeurs (30,31) dans une position haute (32) dans la cuve (2) en vue de l'opération de pigeage.

## Claims

1. Dipping device for vinification vats, of the type comprising a frame (1) in the form of a portal, which supports dipping means (30, 31), and is provided with rolling means (5) and drive means (50), controlled by a central control unit, making it possible to displace the said frame (1) above a row of vats (2), from one vat to the next, the central axis (10) of the frame (1) being parallel to the axes (20) of the vats (2), and substantially coaxial to the axis (20) of the vat (2) concerned, during a dipping operation; **characterised in that** the dipping means (30, 31) consist of at least two dipping tools (30, 31), which are situated in a horizontal plane, and are connected to one another by a horizontal bar (3), which is mobile firstly in vertical translation, and is mobile secondly around the central axis (10) of the frame, such that at least one (31) of the dipping tools (30, 31) is in the vicinity of the edge of the vat (2) during the dipping operation.

2. Dipping device according to claim 1, **characterised in that** the dipping tools (30, 31) are circular plates.

3. Dipping device according to either of the preceding claims, **characterised in that** the horizontal bar (3) which connects the dipping tools (30, 31) to one another is integral with the end of the rod (16) of an eccentric jack (15), parallel to the central axis (10) of the frame, and is integral by means of a radial arm (14) with a central shaft (11), which is rotated by a motor (12), around the said central axis (10).

4. Dipping device according to any one of the preceding claims, **characterised in that** it additionally comprises a device (17) for indexing the rod (16) of the jack (15), which makes it possible to position the dipping tools (30, 31) in a high position (32) in the vat (2), for the purpose of the dipping operation.

## Patentansprüche

1. Tresteruntertauchvorrichtung für Weingärbottiche mit einem trägerförmigen Gestell (1), das Untertauchmittel (30, 31) trägt, und ausgestattet ist mit Rollmitteln (5) und Motoren (50), die durch eine zentrale Steuereinheit gesteuert sind, wobei das Gestell (1) über eine Reihe von Bottichen (2) von einem Bottich zum anderen bewegbar ist und die Mittelachse (10) des Gestells (1) parallel zu den Achsen (20) der Bottiche (2) und im wesentlichen koaxial zu der Achse (20) des Bottiches (2) ist, bei dem gerade Trester untergetaucht wird, **dadurch gekennzeichnet, daß** die Untertauchmittel (30,31) aus mindestens zwei Untertauchwerkzeugen (30,31) bestehen, die in einer horizontalen Ebene angeordnet sind und untereinander durch eine horizontale Stange (3) verbunden sind, die einerseits in vertikaler Translation und andererseits um die Mittelachse (10) des Gestells derart bewegbar ist, daß mindestens eines (31) der Untertauchwerkzeug (30, 31) sich während des Tresteruntertauchens nahe dem Rand des Bottiches (2) befindet.

2. Tresteruntertauchvorrichtung nach Anspruch 1, **dadurch gekennzeichnet, daß** die Untertauchwerkzeugen (30, 31) kreisförmige Scheiben sind.

3. Tresteruntertauchvorrichtung nach einem der vorherigen Ansprüche, **dadurch gekennzeichnet, daß** die horizontale Stange (3), die die Untertauchwerkzeuge (30, 31) miteinander verbindet, am Ende der Gewindestange (16) eines exzentrischen Stellantriebs (15) befestigt ist, die parallel zur Mittelachse (10) des Gestells ist und mittels eines radialen Arms (14) an einer Mittelwelle (11) befestigt ist, die durch einen Motor (12) um die Mittelachse (10) rotiert wird.

4. Tresteruntertauchvorrichtung nach einem der voherigen Ansprüche, **dadurch gekennzeichnet, daß** sie ferner eine Indexierungsvorrichtung (17) für die Gewindestange (16) des Stellantriebs (15) aufweist, die es erlaubt, die Untertauchwerkzeuge (30, 31) in einer hohen Position (32) in dem Bottich (2) zu positionieren, in dem der Trester untergetaucht werden soll.
